# EUROPEAN PATENT APPLICATION

(11) **EP 3 085 824 A1**
(43) Date of publication of application: **26.10.2016**
(21) Application number: 14870979.3
(22) Date of filing: 23.05.2014
(51) Int. Cl.: D04H 13/00

(54) **NON-WOVEN FABRIC COIL**

(30) Priority: 16.12.2013 CN 201320826644 U
(71) Applicant: Xiamen Hejie Non-woven Products Co., Ltd., Xiamen, Fujian 361100 (CN)
(72) Inventor: WENG, Qiqing, Xiamen Fujian 361100 (CN); HUANG, Shuqiang, Xiamen Fujian 361100 (CN)
(74) Representative: Cabinet Chaillot
(86) International application number: PCT/CN2014/078219
(87) International publication number: WO 2015/089995

(57) **Abstract**

Provided is a non-woven fabric coil used as a ring complementary to a hook in a mechanical fastener, which is bonded by hot rolling using hot-rolled points for at least three layers of fibres having various fibre numbers, wherein the fibre numbers of the surface fibre layer (3) and the bottom fibre layer (5) are more than 1.0D, and the fibre number of the middle fibre layer (4) is less than 1.0D; raised areas (2) and concave areas (1) formed by the hot-rolled points are formed on the surface of the non-woven fabric coil, wherein the height difference between the raised areas and the concave areas is more than 0.4 m; fibres in the raised areas can be combined with a hook in a mechanical fastener thereby achieving a fastening effect, the manufactured ring complementary to the hook can satisfy a unique air permeability requirement therefor by configuration without requiring a composite plastic film substrate; and in the manufacturing process, the moulding therefor can be achieved simply through a one-step hot rolling process.

## Description

### (a) Technical Field of the Invention

The present invention relates generally to a structure of a non-woven fabric coil, and more particularly to a non-woven fabric coil that functions as a loop piece of a mechanical fastener for engagement with a hook piece.

### (b) Description of the Prior Art

A mechanical fastener is known in this field and is also referred to as a hook and loop fastener. One of the fasteners of this type that is popular in the market bears a trade name of Velcro®. The mechanism fastener is composed of two separate parts, one of which comprises hooks having projecting ends or formed as a J-shape and another one comprises loops forming a loop function layer. When the hooks and the loops are pressed against each other, the hooks are forced into the loops to entangle with the loops so as to have the fastener securely fastened without being readily detached. When a proper peeling force is applied, the hooks and the loops separate from each other. Through such coupling and separation of the hooks and loops, repeated uses are made possible.

Fasteners for different purposes may be formed by selecting the material and shape of the hooks and the material and size and shape of the loop function layer that is contactable with the hooks of the loops, making them widely applicable to the field of non-permanent coupling, such as shoestrings and clothing. Compared to the traditionally used adhesive tapes, the hook and loop fasteners possess advantages of being resistant against humidity, oil, and powder and have been favored for use in disposable sanitary products, such as diapers, making them an ideal material for the industry.

The loops of a mechanical fastener are often made by mounting woven or non-woven yarns, through adhesives, to a base of a film. For example, Chinese Patent No. CN103153252 A discloses a loop piece for engagement with a hook piece of a mechanical fastener of an absorbent product. The loop piece is formed by adhesively attaching a knitted object to a film carrier. The knitted object comprises warp lines in a warp-wise direction and loops coupled thereto for engagement with hooks. The carrier and the knitted object are adhesively coupled in such a way that a surface area of the carrier that faces the knitted object has only a portion covered by adhesives. The loops of the Chinese patent has excellent coupling with hooks in both lateral and longitudinal directions. Chinese Patent No. CN100537221 C provides wire coil composite material that has been modified and shows no elasticity and possesses size stability and high strength and comprises a non-elastic orienting film extending in a first direction and one or more flexible non-woven material pieces that are mounted, in an intermittent, on at least a portion of a surface of the non-elastic orienting film. A US patent, of which the patent number is 4,761,318, discloses a loop structure for use with a mechanical fastener, which comprises a soft flexible sheet-like fibrous structure having a multiplicity of loops engageable with hooks of the mechanical fastener and a layer of thermoplastic resin film adhered to the sheet for fixing the loops.

Although the fasteners according to the inventions of these patents possess various advantages, they requires a film like base so that when used in the field of disposable sanitary products, such as diapers, air permeability must be affected and it is not possible to achieve a desired level of air permeability through setting thereby making them adverse for subsequent use of the loops in the manufacture of diapers. Further, the disposable sanitary products will be disposed of once being used so that the time period of being in use is short, generally several hours. Thus, mechanical fasteners, when applied in this field, must achieve a balance between performance and cost. Commonly known ways of manufacture of the loops include various steps of film preparation, formation of hoop function layers, and adhesive bonding so that they suffer the disadvantages that the manufacture processes are complicated and the manufacturing costs are high.

### SUMMARY OF THE INVENTION

An object of the present invention is to provide a non-woven fabric coil that functions as a loop piece of a mechanical fastener for engagement with a hook piece and has a low cost and a simple manufacturing process and is suitable for mass production and provides excellent air permeability.

To achieve the above object, a solution adopted in the present invention is:
a non-woven fabric coil, wherein the non-woven fabric coil comprises at least three filament layers having different filament deniers, in which a surface filament layer and a bottom filament layer have filament deniers that are greater than 1.0D, while an intermediate filament layer has filament denier that is less than 1.0D. The filament layers are calendar-bonded at calendering sites thereof, so that the non-woven fabric coil so formed has a surface on which raised sections and recessed sections formed of the calendering sites are formed. A height difference between the raised sections formed on the surface of the non-woven fabric and the recessed sections that are formed of the calendering sites is greater than 0.4mm.

The non-woven fabric coil has air permeability less than 5000L/m²/s.

The filament denier of the intermediate filament layer is less than 0.5D.

The recessed sections formed of the calendering sites take 5%-70% of a total surface area of the non-woven fabric.

The recessed sections formed of the calendering sites take 20%-50% of the total surface area of the non-woven fabric.

The surface filament layer is formed of continuous filaments, and the filaments have a denier greater than 1.3D.

The bottom filament layer is formed of continuous filaments, and the filaments have a denier greater than 1.3D.

The intermediate filament layer has a fabric weight of 2-25 grams per square meter.

The non-woven fabric coil has a fabric weight of 25-125 grams per square meter.

The surface filament layer and the bottom filament layer comprise at least one intermediate filament layer therebetween.

By adopting the above solution, the present invention shows the following advantages:
(1) Since the non-woven fabric coil of the present invention is made up of at least three layers of filaments having different filament deniers and coupled to each other through calendering, there is no need to use adhesives having expensive costs thereby lowering down the cost and at the same time reducing irritation of human body caused by the adhesives. In the manufacturing process, shaping can be achieved through just one step of calendering so that manufacturing cost is low. The non-woven fabric coil, when used as a loop piece of a mechanical fastener, may achieve balance between performance and cost and provides excellent comfortableness and aesthetics.
(2) The non-woven fabric coil of the present invention requires no plastic film to function as a base and this makes the non-woven fabric coil showing excellent air permeability when used as a loop piece of a mechanical fastener, suiting the needs of disposable sanitary products, such as diapers, for air permeability to improve comfortableness of wearers.

Thus, the present invention possesses the advantages of simplified manufacturing process and low cost and achieves balance between performance and cost.

### BRIEF DESCRIPTION OF THE DRAWINGS

FIG 1 is a schematic top view showing a non-woven fabric coil according to the present invention.
FIG 2 is a cross-sectional view taken along line A-B of FIG. 1.
FIG 3 is a cross-sectional view illustrating a non-woven fabric coil comprising three filament layers having different deniers according to the present invention.
FIG 4 is a schematic top view showing a second embodiment of the non-woven fabric coil according to the present invention.
FIG 5 is a schematic top view showing a third embodiment of the non-woven fabric coil according to the present invention.
FIG 6 is a cross-sectional view illustrating a non-woven fabric coil comprising five filament layers having different deniers according to the present invention.
FIG 7 is a schematic view illustrating an application of the non-woven fabric coil according to the present invention to a diaper.

### DETAILED DESCRIPTION OF THE PREFERRED EMBODIMENTS

Embodiments of the present invention will be expounded with reference to the attached drawings.

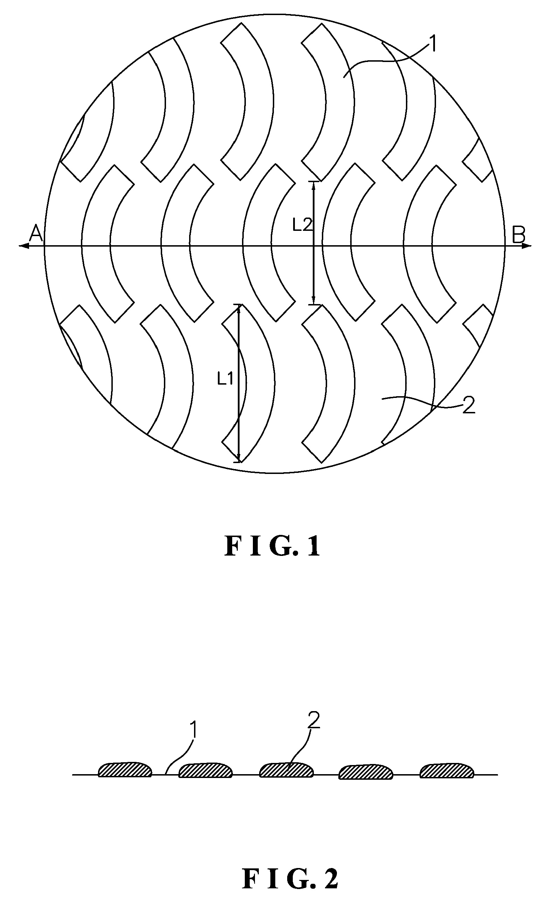

As shown in FIGS. 1-7, the present invention discloses a non-woven fabric coil, which is applicable to a mechanical fastener to function as a loop piece 11 complementary to a hook piece 12. The non-woven fabric coil is made up of at least three filament layers having different filament deniers, wherein a surface filament layer 3 and a bottom filament layer 5 have filament deniers that are greater than 1.0D, while an intermediate filament layer 4 has filament denier that is less than 1.0D. The filament layers are coupled to each other by means of calender bonding applied to calendering sites thereon so as to provide a loop piece for engagement with a hook piece of a mechanical fastener. The non-woven fabric coil so structured has a surface on which raised sections 2 and recessed sections 1 formed of the calendering sites are formed.

The surface filament layer 3 can be formed of continuous filaments, in which the denier of the filaments is greater than 1.3D. The bottom filament layer may also be formed of continuous filaments, in which the denier of the filaments is greater than 1.3D. The use of filaments having relatively large deniers is to ensure the coupling strength of the filament layer. The intermediate filament layer 4 has denier that is less than 0.5D, and the use of filaments having a relatively small denier is to provide air permeability of the non-woven fabric. The intermediate filament layer 4 has a fabric weight that is 2-25 grams per square meter. By adjusting the fabric weight of the intermediate filament layer 4, desired air permeability may be achieved so as to allow the non-woven fabric coil that has been made into a loop piece 11 to be subsequently applied to the manufacture of a disposable sanitary product, such as diapers.

Each of the filament layers is subjected to calendar bonding applied at calendering sites in such a way each of the calendering sites forms a recessed section that takes 5%-70%, preferably 20%-50%, of a total surface are of the non-woven fabric. A proper calendering ratio would make loops formed of the raised sections 2 formed of filaments around the recessed sections 1 formed of the calendering sites of the loop piece 11 of the mechanical fastener formed of the non-woven fabric coil stable and sound, facilitating engagement thereof with a hook piece 12 of the mechanical fastener. Compared to fasteners that are mounted to a base formed of a plastic film by means of adhesives, the loop piece 11 according to the present invention for engagement with a hook piece 12 of a mechanical fastener has a simplified manufacturing process.

In the non-woven fabric coil, the raised sections 2 that are formed of filaments and are fibrous and the recessed sections 1 that are formed of the calendering sites are arranged to be alternate with each other. A height difference between the raised sections 2 formed on the surface of the non-woven fabric and the recessed sections 1 that are formed of the calendering sites is greater than 0.4mm. The raised sections 2 or the recessed sections 1 provide a three-dimensional pattern on the non-woven fabric coil so that the surface of the non-woven fabric coil is provided with the sense of three-dimension, aesthetics, and comfortableness. The calendering sites that constitute the recessed sections 1 provide an effect of supporting. The raised sections 2 that are fibrous can be made in a loose form and are engageable with a hook piece 12 of a mechanical fastener. Further, the hook piece 12 must penetrate three layers of filaments for coupling with the fibrous raised sections 2 so that entangling between the filaments and the hook piece 12 would be more secured thereby improving the coupling force between the hook piece 12 and the fibrous raised sections 2. In other words, compared to the conventional fasteners, a loop piece 11 formed of the non-woven fabric coil according to the present invention, when engaging a hook piece 12 of a mechanical fastener, would provide the hook piece 12 with a stronger coupling force. Further, products of different coupling forces may be obtained by adjusting the fabric weight and denier of each of the filament layers.

### Embodiment 1

As shown in FIGS. 1, 2, and 3, a top view and cross-sectional views of the non-woven fabric coil according to the present invention are provided. The top view illustrates the patterns that are formed of the calendering sites are of a crescent configuration. The non-woven fabric coil is made up of three filament layers having different deniers and the drawings provide an arrangement of the three different layer of filaments, including a surface filament layer 3, an intermediate filament layer 4, and a bottom filament layer 5. The surface filament layer 3 and the bottom filament layer 5 have deniers that are greater than 1.0D and the filament layers 4 has a denier that is less than 1.0D. In FIG 1, the recessed sections that are respectively formed of the calendering sites 1 are not connected to each other and are arranged in the form of "islands" that constitute three-dimensional patterns on the non-woven fabric coil. The recessed sections 1 formed of the calendering sites have a maximum length L1 of 3.0mm and a maximum spacing distance L2 of 2.5mm between two adjacent recessed sections 1.

### Embodiment 2

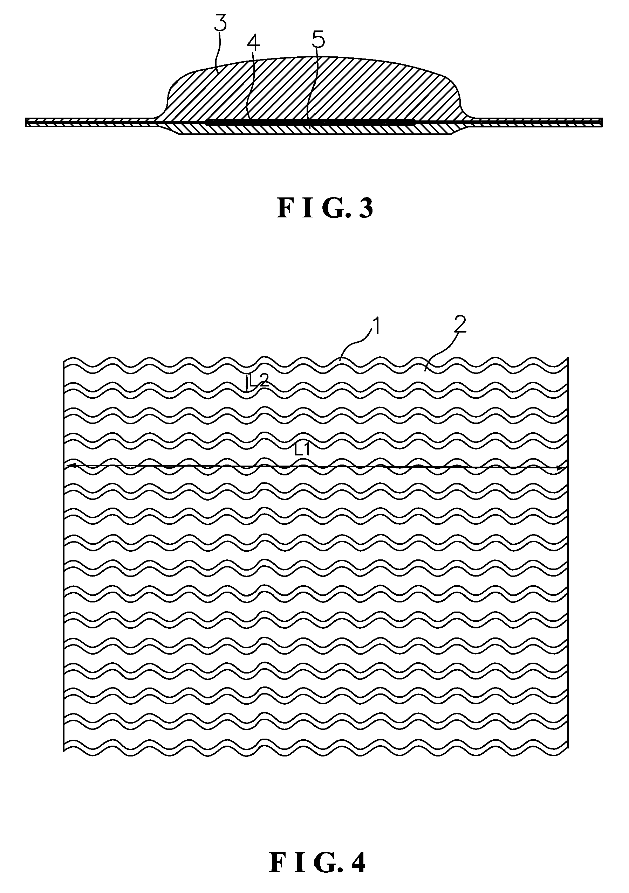

As shown in FIGS. 3 and 4, a top view and a cross-sectional view of another structure of the non-woven fabric coil according to the present invention are provided. A difference from Embodiment 1 is that the calendering sites formed on a top side thereof are arranged to form continuous wavy configurations. The non-woven fabric coil is made up of three different filament layers and the drawings provide an arrangement of the three different filament layers, including a surface filament layer 3, an intermediate filament layer 4, and the bottom filament layer 5. The surface filament layer 3 and the bottom filament layer 5 have deniers that are greater than 1.0D and the filament layers 4 has a denier that is less than 1.0D. In FIG 4, the recessed sections 1 that are respectively formed of the calendering sites 1 are not connected to each other and are arranged in the form of "islands" that constitute three-dimensional patterns on the non-woven fabric coil. The recessed sections 1 formed of the calendering sites have a maximum length L1 of 3.0mm and a maximum spacing distance L2 of 2.5mm between two adjacent recessed sections.

### Embodiment 3

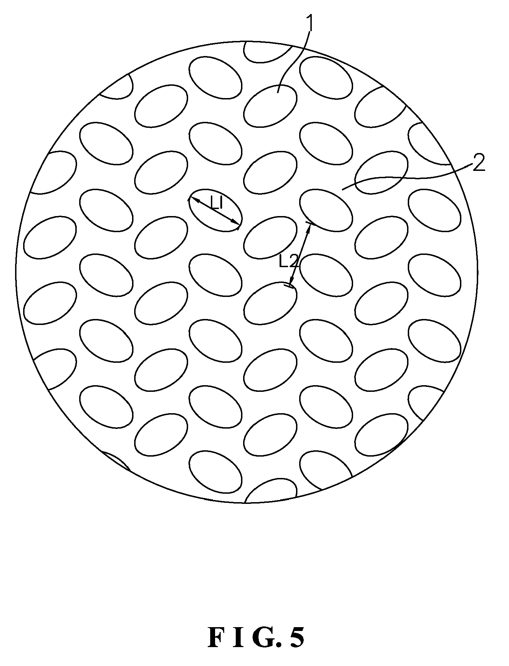

As shown in FIGS. 3 and 5, a top view and a cross-sectional view of another structure of the non-woven fabric coil according to the present invention are provided. A difference from Embodiments 1 and 2 is that the calendering sites formed on a top side thereof are arranged to form elliptic configurations. The non-woven fabric coil is made up of three different filament layers and the drawings provide an arrangement of the three different filament layers, including a surface filament layer 3, an intermediate filament layer 4, and the bottom filament layer 5. The surface filament layer 3 and the bottom filament layer 5 have deniers that are greater than 1.0D and the filament layers 4 has a denier that is less than 1.0D. In FIG 5, the recessed sections 1 that are respectively formed of the calendering sites 1 are not connected to each other and are arranged in the form of "islands" that constitute three-dimensional patterns on the non-woven fabric coil. The recessed sections 1 formed of the calendering sites have a maximum length L1 of 3.0mm and a maximum spacing distance L2 of 2.5mm between two adjacent recessed sections.

### Embodiment 4

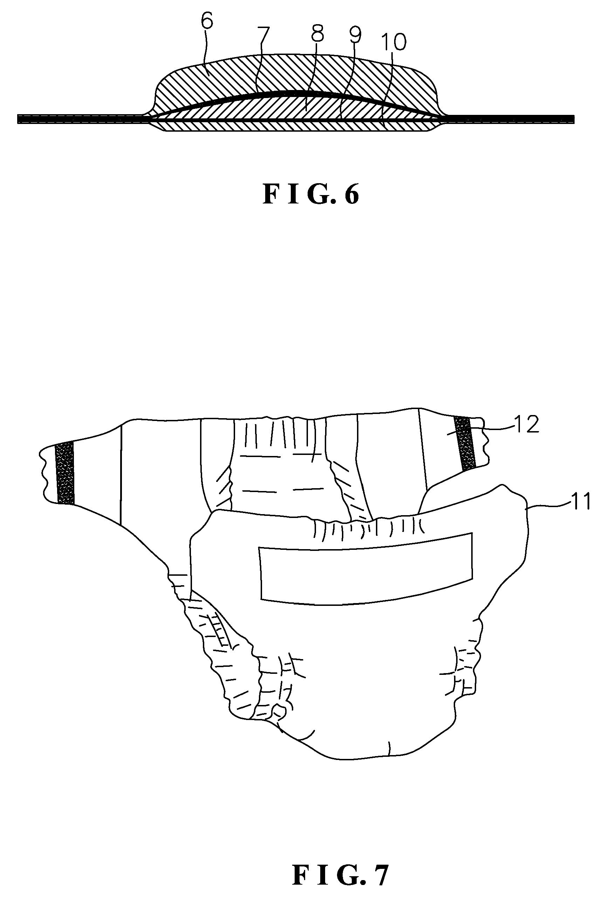

As shown in FIG 6, a cross-sectional view of another structure of the non-woven fabric coil according to the present invention is provided. A difference from Embodiments 1, 2, and 3 is that in the instant embodiment, the non-woven fabric coil is made up of five filament layers. The drawings provide an arrangement of the five different filament layers, including a first filament layer 6, a second filament layer 7, a third filament layer 8, a fourth filament layer 9, and a fifth filament layer 10. The first filament layer 6, the third filament layer 8, and the fifth filament layer 10 have deniers that are greater than 1.0D; the second filament layer 7 and the fourth filament layer 9 have deniers that are less than 1.0D.

When the non-woven fabric coil according to Embodiment 1 of the present invention is used to make a hoop piece 11 of a mechanical fastener for engagement with a hook piece 12 in an application to a diaper, as shown in FIG 7, hook pieces 12 of mechanical fasteners provided on left and right portions of a rear waist part of the diaper are attachable to the loop piece 11 provided on a front waist part of the diaper to have the diaper properly put on the body of a wearer. The loop piece 11 manufactured according to the present invention comprises no base made of plastics so as to show excellent air permeability, making it suitable for use in products requiring excellent air permeable performance, such as diapers.

Further, during the manufacturing of the diaper, a loop piece 11 that has been properly cut is first suction-attached to a roller and then mounted to the front waist part of the diaper so as to achieve the condition illustrated in FIG 7. If the loop piece 11 has excessively large air permeability, then the loop piece 11 would be hard to suction-attach to the roller, so that upon mounted to the front waist part of the diaper, incorrect positioning or position slifting may occur, leading to a defect product. Thus, during the manufacturing of the diaper, the desired air permeability of the loop piece 11 should not be excessively large and an ideal condition would be that the air permeability of the loop piece 11 is adjustable according a desired level so as to match the purpose of production. In the present invention, through the inclusion of the intermediate filaments having a filament denier that is less than 1.0D and adjustment of the fabric weights of the filament layers, the purpose of adjusting the air permeability of the loop piece 11 may be achieved according to the desired level thereby making the manufacturing of the diaper efficient.

The present invention has been described above with reference to preferred embodiments thereof, but is not limited to a scope defined by the above embodiments. Equivalent variations and modifications that are made on the basis of the technical solution and disclosure of the specification of the present invention should be considered within the scope of the present invention defined only by the appended claims.

## Claims

1. A non-woven fabric coil, **characterized in that** the non-woven fabric coil comprises at least three filament layers having different filament deniers, wherein a surface filament layer 3 and a bottom filament layer 5 have filament deniers that are greater than 1.0D, while an intermediate filament layer 4 has filament denier that is less than 1.0D, the filament layers being calendar-bonded at calendering sites thereof, so that the non-woven fabric coil so formed has a surface on which raised sections 2 and recessed sections 1 formed of the calendering sites are formed, a height difference between the raised sections 2 formed on the surface of the non-woven fabric and the recessed sections 1 that are formed of the calendering sites being greater than 0.4mm.

2. The non-woven fabric coil according to claim 1, **characterized in that** the non-woven fabric coil has air permeability less than 5000L/m²/s.

3. The non-woven fabric coil according to claim 1, **characterized in that** the filament denier of the intermediate filament layer 4 is less than 0.5D.

4. The non-woven fabric coil according to claim 1, **characterized in that** the recessed sections 1 formed of the calendering sites take 5%-70% of a total surface area of the non-woven fabric.

5. The non-woven fabric coil according to claim 4, **characterized in that** the recessed sections 1 formed of the calendering sites take 20%-50% of the total surface area of the non-woven fabric.

6. The non-woven fabric coil according to claim 1, **characterized in that** the surface filament layer 3 is formed of continuous filaments.

7. The non-woven fabric coil according to claim 1, **characterized in that** the bottom filament layer 5 is formed of continuous filaments.

8. The non-woven fabric coil according to claim 1, **characterized in that** the intermediate filament layer 4 has a fabric weight of 2-25 grams per square meter.

9. The non-woven fabric coil according to claim 1, **characterized in that** the non-woven fabric coil has a fabric weight of 25-125 grams per square meter.

10. The non-woven fabric coil according to claim 1, **characterized in that** the surface filament layer 3 and the bottom filament layer 5 comprise at least one intermediate filament layer 4 therebetween.
